# EUROPEAN PATENT SPECIFICATION

(11) **EP 3 965 276 B1**
(45) Date of publication and mention of the grant of the patent: **05.07.2023**
(21) Application number: 21164285.5
(22) Date of filing: 23.03.2021
(51) Int. Cl.: H02M 1/42, H02M 1/12

(54) **FILTER CIRCUIT WITH HARMONIC COMPENSATION**
FILTERSCHALTUNG MIT OBERWELLENKOMPENSATION
CIRCUIT DE FILTRE À COMPENSATION D'HARMONIQUE

(30) Priority: 03.09.2020 CN 202010914355
(43) Date of publication of application: 09.03.2022
(73) Proprietor: Delta Electronics, Inc., Taoyuan City 32063 (TW)
(72) Inventor: HSU, Chia-Chang, 32063 Taoyuan City (TW); CHEN, Wei-Ting, 32063 Taoyuan City (TW); CHEN, Sheng-Jian, 32063 Taoyuan City (TW)
(74) Representative: 2K Patentanwälte Blasberg Kewitz & Reichel

(56) References cited:
- EP-A2- 0 377 510
- EP-A2- 1 033 806
- CN-Y- 201 131 076
- US-A1- 2013 194 838

## Description

### BACKGROUND

### Technical Field

The present disclosure relates to a filter circuit with harmonic compensation, and more particularly to a filter circuit with harmonic compensation by using passive electronic components to simplify circuit control and reduce circuit cost.

### Description of Related Art

The statements in this section merely provide background information related to the present disclosure and do not necessarily constitute prior art.

A total harmonic distortion (THD) is an indicator of a harmonic distortion degree of an electrical signal, and it is defined as the ratio of the sum of the powers of all harmonic components to the power of the fundamental frequency. Distortion factor, a closely related term, is sometimes used as a synonym. The greater the total harmonic distortion, the greater the proportion of harmonic components. Harmonic distortion means that some unwanted signals are superimposed on the input signal due to non-linear factors, and these unwanted signals are all multiples of the original input signal.

At present, most electronic devices operate directly or indirectly with DC voltage inside. Therefore, most of the input ends of electronic devices currently use a bridge rectifier to rectify the AC voltage to acquire the DC voltage. The disadvantages of the bridge rectifier is that once a phase difference between the input voltage and the input current occurs, the power factor is reduced and the input current contains high harmonic components. Therefore, if the input voltage and the input current have no compensation of harmonic components, the waveform of the input current will be seriously distorted, thereby leading to instability of the power system and even the interruption of the power supply.
EP1033806A3 discloses an electric power supply including an ac power source, a bridge rectifier circuit having four diodes 1 to 4 for rectifying an alternating current produced with the ac power source, a reactor connected between the ac power source and an ac input terminal, a capacitor connected between an ac input terminal and a de output terminal, and a smoothing capacitor. During one half-cycle of the ac input, a resonance current flows through the reactor and the capacitor, and charging the capacitor increases VC from zero to VO. During the next half-cycle of the ac input, discharging the capacitor decreases VC from VO to zero, whereby a smooth current due to the serial resonator flows right from the zero crossing. EP0377510A3 discloses a power factor correction circuit employs a metal oxide varistor in series with a filter capacitor. The varistor provides a low-impedance path for pre-charging the filter capacitor, thus enabling the avoidance of high inrush current to circuit devices, while the filter capacitor energizes the circuit when the capacitor voltage exceeds the AC source voltage. The circuit is insensitive to normal line transients. One application is for use in a gas discharge lamp ballast.
CN201131076Y relates to an electronic ballast for a high voltage sodium lamp, comprising a full-bridge rectifier circuit, a passive correction circuit, a half bridge inverter circuit, a trigger circuit, an audio resistant ferroresonant circuit and a feedback circuit, which is characterized in that: the passive correction circuit is a dual-way self-contained complementary circuit; the trigger circuit is connected with the output coil of the half bridge inverter circuit through the audio resistant ferroresonant circuit formed by an impulse transformer and a diode being connected in series with each other; the high voltage sodium lamp is connected with both ends of the audio resistant ferroresonant circuit; and an inductor and a capacitor are connected in series with each other forming the feedback circuit which is connected with one end of the output coil of the half bridge inverter circuit. The electronic ballast for a high voltage sodium lamp has the advantages of good stability, reliable performance, simple circuit structure, long service life, improvement of the power factor over 0.98, and small start current and working current.
US2013194838A1 discloses a low input-current harmonic three-phase boost rectifier including an input stage for receiving a three-phase input voltage in relation to a neutral node and an output stage adapted to couple to at least one load. The rectifier further includes one or more switching converter stages, each having a plurality of switches coupled to the neutral node, the plurality of switches operating with a fixed duty cycle, the fixed duty cycle being a substantially 50% duty cycle. The rectifier further includes one or more controllers adapted to vary the switching frequency of the plurality of switches based on at least one of a condition of the at least one load or the input voltage and includes one or more decoupling stages, each including one or more inductive elements adapted to inductively decouple the output stage from at least one of the one or more switching converter stages.

Accordingly, how to design a filter circuit with harmonic compensation by using passive electronic components to simplify circuit control, reduce circuit cost, and achieve harmonic compensation effect is a major topic for the inventors of the present disclosure.

### SUMMARY

In order to solve the above-mentioned problems, the present disclosure provides a filter circuit with harmonic compensation according to independent claim 1.
The dependent claims recite advantageous embodiments of the invention.

The main purpose and effect of the present disclosure are to use a circuit structure in which a first diode in series with a second diode acts as a clamping circuit so that a voltage across the two diodes is greater than a voltage across the bridge rectifying diode. Therefore, the freewheeling capacitor will not generate a negative voltage when the bridge rectifying diode and the freewheeling switch are both forward biased, thereby increasing the harmonic compensation effect of the filter circuit.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWING

The present disclosure can be more fully understood by reading the following detailed description of the embodiment, with reference made to the accompanying drawings as follows:
FIG. 1 is a circuit diagram of a filter circuit with harmonic compensation according to the present disclosure.
FIG. 2A is a circuit diagram illustrating a current path when the filter circuit operates under a negative half cycle of an AC voltage according to the present disclosure.
FIG. 2B is a circuit diagram illustrating a current path when the filter circuit operates under a positive half cycle of the AC voltage according to the present disclosure.
FIG. 3 are schematic waveforms of the AC voltage and compensated input current according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

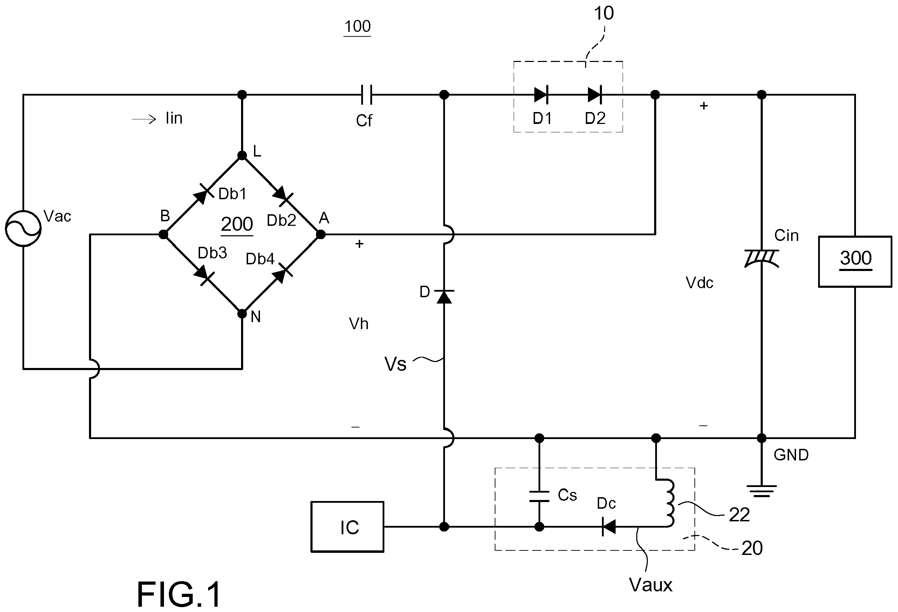

Please refer to FIG. 1, which shows a circuit diagram of a filter circuit with harmonic compensation according to the present disclosure. The filter circuit 100 with harmonic compensation (hereinafter "filter circuit") provides a harmonic compensation of an input current Iin to reduce the harmonic distortion of the input current Iin waveform. A bridge rectifying circuit 200 includes four bridge rectifying diodes Db1-Db4, which receive an AC voltage Vac through a live wire end L and a neutral wire end N, and provide a half-wave voltage Vh from a positive end A and a negative end B. The half-wave voltage Vh is filtered by an input capacitor Cin to provide a DC voltage Vdc to an electronic apparatus 300. The detailed description of the four bridge rectifying diodes Db1-Db4 will be made as follows.

The filter circuit 100 is coupled to the bridge rectifying circuit 200 and the input capacitor Cin, and the filter circuit 100 includes a freewheeling capacitor Cf, a freewheeling switch 10, and a unidirectional switch D. A first end of the freewheeling capacitor Cf is coupled to the live wire end L, a second end of the freewheeling capacitor Cf is coupled to a first end of the freewheeling switch 10 and a first end of the unidirectional switch D, and a second end of the freewheeling switch 10 is coupled to the positive end A and a first end of the input capacitor Cin. A second end of the unidirectional switch D is coupled to a voltage source Vs, and the voltage source Vs charges the freewheeling capacitor Cf through the unidirectional switch D. In one embodiment, the unidirectional switch D is, for example but not limited to, a diode. Any circuit element that enables the voltage source Vs to charge the freewheeling capacitor Cf and blocks the energy back to the voltage source Vs when the freewheeling capacitor Cf is discharged should be embraced within the scope of the present disclosure. For example, a switch with corresponding control circuit is used. The filter circuit 100 further includes a power generation circuit 20, and the power generation circuit 20 may provide the voltage source Vs. A first end of the power generation circuit 20 is coupled to the second end of the unidirectional switch D, and a second end of the power generation circuit 20 is coupled to the negative end B, i.e., a ground end GND.

Specifically, the freewheeling switch 10 mainly provides a discharge path from the freewheeling capacitor Cf to the input capacitor Cin. In one embodiment, the freewheeling switch 10 includes a first diode D 1 and a second diode D2 connected to the first diode D 1 in series. An anode of the first diode D 1 is coupled to the second end of the freewheeling capacitor Cf and the first end of the unidirectional switch D, and a cathode of the second diode D2 is coupled to the positive end A and the input capacitor Cin. The power generation circuit 20 includes an auxiliary winding 22 and a voltage stabilizing capacitor Cs. A first end of the auxiliary winding 22 is coupled to the negative end B. A first end of the voltage stabilizing capacitor Cs is coupled to a second end of the auxiliary winding 22, and a second end of the voltage stabilizing capacitor Cs is coupled to the negative end B. The auxiliary winding 22 generates an auxiliary voltage Vaux to charge the voltage stabilizing capacitor Cs so that the voltage source Vs is established on the voltage stabilizing capacitor Cs.

The auxiliary winding 22 is mainly coupled to the electronic apparatus 300, such as a power converter having transformer (not shown), and an auxiliary voltage Vaux is induced by the coupling of the transformer. The voltage stabilizing capacitor Cs is connected in parallel with the auxiliary winding 22, so that the auxiliary voltage Vaux becomes a stable voltage source Vs and is provided to the controller IC, thereby achieving stable operation of the electronic apparatus 300. That is, the power generation circuit 20 serves a power source (the voltage source Vs) for the controller IC. In one embodiment, the power generation circuit 20 can provide the stable voltage source Vs, and the voltage source Vs may be also supplied to the filter circuit 100 for harmonic compensation so that the filter circuit 100 can reduce the number of circuit components without adding additional power generation circuits. If required by actual circuit applications, the voltage source Vs can be provided by an external power source, or by a voltage-dividing circuit (not shown) used to divide a node voltage in the electronic apparatus 300.

The power generation circuit 20 further includes a rectifying switch Dc. A first end of the rectifying switch Dc is coupled to the auxiliary winding 22 and a second end of the rectifying switch Dc is coupled to the voltage stabilizing capacitor Cs. Specifically, since the type of the electronic apparatus 300 (for example but not limited to a flyback converter or a converter operating in a discontinuous conduction mode (DCM)) or the polarity of the auxiliary winding 22, the auxiliary voltage Vaux induced by the auxiliary winding 22 may include a negative voltage. Since the controller IC can usually only withstand a positive voltage, and the filter circuit 100 also needs a positive voltage source Vs to perform harmonic compensation, the rectifying switch Dc can not only provide rectification for the auxiliary winding 22 during voltage conversion process, but also ensure that the correct power polarity is provided to the controller IC and the filter circuit 100.

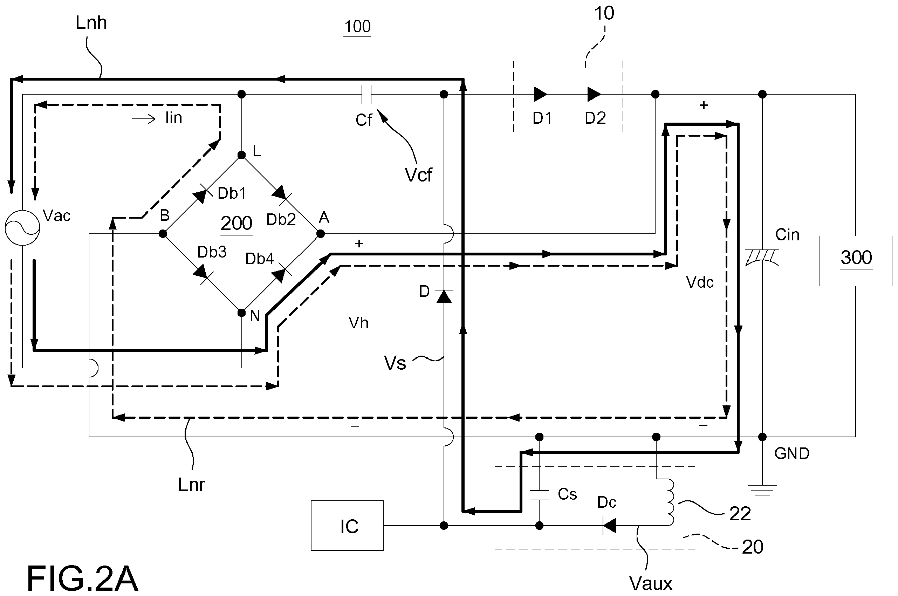

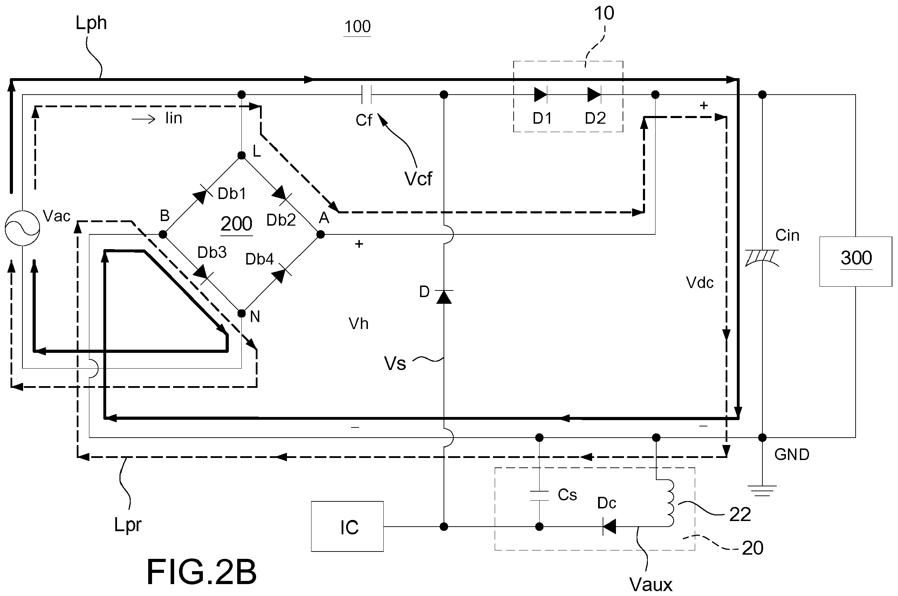

Please refer to FIG. 2A and FIG. 2B, which show a circuit diagram illustrating a current path when the filter circuit operates under a negative half cycle of an AC voltage and a circuit diagram illustrating a current path when the filter circuit operates under a positive half cycle of the AC voltage according to the present disclosure, respectively. In FIG. 2A, when the AC voltage Vac is in the negative half cycle, there will be two current paths established. The first current path is a negative half cycle harmonic compensation path Lnh, and the second current path is a negative half cycle rectifying path Lnr. In the negative half cycle of the AC voltage Vac, there are only two situations that will generate current paths. The first one is that the negative half cycle rectifying path Lnr is generated when the AC voltage Vac is greater than the DC voltage Vdc on the input capacitor Cin. The negative half cycle rectifying path Lnr is formed by the neutral wire end N of the AC voltage Vac, the bridge rectifying diode Db4, the positive end A, the input capacitor Cin, the negative end B, the bridge rectifying diode Db1, and the live wire end L of the AC voltage Vac. In particular, this current path is also the current path for the normal AC voltage Vac to charge the input capacitor Cin through the bridge rectifying circuit 200.

The other current path is mainly provided by the filter circuit 100, which is the negative half cycle harmonic compensation path Lnh generated when the AC voltage Vac is greater than the DC voltage Vdc plus the voltage on the voltage stabilizing capacitor Cs (i.e., the voltage source Vs). The negative half cycle harmonic compensation path Lnh is formed by the neutral wire end N of the AC voltage Vac, the bridge rectifying diode Db4, the positive end A, the input capacitor Cin, the voltage stabilizing capacitor Cs, the unidirectional switch D, the freewheeling capacitor Cf, and the live wire end L of the AC voltage Vac. In particular, this current path is the current path of performing harmonic compensation to the negative half cycle of the input current Iin by the filter circuit 100. Because the AC waveform alternately changes in the positive half cycle and the negative half cycle over time. When the negative half cycle harmonic compensation path Lnh is provided, since the capacitor voltage Vcf on the freewheeling capacitor Cf (i.e., a voltage across the freewheeling capacitor Cf) has been discharged in the previous cycle (i.e., a positive half cycle harmonic compensation path Lph is formed in the positive half cycle), no energy is stored in the freewheeling capacitor Cf. Therefore, when the negative half cycle harmonic compensation is performed, the voltage source Vs provided by the power generation circuit 20 charges the freewheeling capacitor Cf through the unidirectional switch D so that the capacitor voltage Vcf is established on the freewheeling capacitor Cf.

In FIG. 2B, when the AC voltage Vac is in the positive half cycle, there will be two current paths established. The first current path is a positive half cycle harmonic compensation path Lph, and the second current path is a positive half cycle rectifying path Lpr. In the positive half cycle of the AC voltage Vac, there are only two situations that will generate current paths. The first one is that the positive half cycle rectifying path Lpr is generated when the AC voltage Vac is greater than the DC voltage Vdc on the input capacitor Cin. The positive half cycle rectifying path Lpr is formed by the live wire end L of the AC voltage Vac, the bridge rectifying diode Db2, the positive end A, the input capacitor Cin, the negative end B, the bridge rectifying diode Db3, and the neutral wire end N of the AC voltage Vac. In particular, this current path is also the current path for the normal AC voltage Vac to charge the input capacitor Cin through the bridge rectifying circuit 200.

The other current path is mainly provided by the filter circuit 100, which is the positive half cycle harmonic compensation path Lph generated when the AC voltage Vac plus the capacitor voltage Vcf on the freewheeling capacitor Cf is greater than the DC voltage Vdc. The positive half cycle harmonic compensation path Lph is formed by the live wire end L of the AC voltage Vac, the freewheeling capacitor Cf, the freewheeling switch 10, the input capacitor Cin, the negative end B, the bridge rectifying diode Db3, and the neutral wire end N of the AC voltage Vac. In particular, this current path is the current path of performing harmonic compensation to the positive half cycle of the input current Iin by the filter circuit 100. Since the capacitor voltage Vcf is established by the freewheeling capacitor Cf in the previous cycle (i.e., the negative half cycle harmonic compensation path Lnh is formed in the negative half cycle), the energy stored in the freewheeling capacitor Cf is released to the input capacitor Cin through the freewheeling switch 10 when the positive half cycle harmonic compensation is performed.

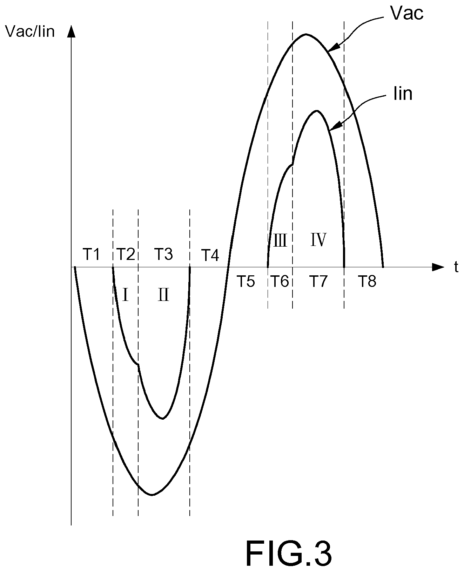

In one embodiment, since some electronic products only need to comply with the specification of harmonic distortion but not the specification of power factor(for example but not limited to, IEC6100-3-2 Class A, in which, the harmonic distortion rate must be less than a certain percentage), the rear end of the input capacitor Cin does not need to be coupled to the expensive power factor corrector (PFC). It is only necessary to use the filter circuit 100 to make the current waveforms I and III as shown in FIG. 3 in the positive and negative half cycles of the AC voltage Vac, and the harmonic distortion can be improved. Moreover, it can selectively use only cheap and easily available passive electronic components to reduce circuit costs and improve harmonic distortion without using active control components and corresponding control technology.

Please refer to FIG. 3, which show schematic waveforms of the AC voltage and compensated input current according to the present disclosure, and also refer to FIG. 1 to FIG. 2B. During a time period T1, the AC voltage Vac is in the negative half cycle, and since a voltage generated in the previous cycle (i.e., the positive half cycle of the AC voltage Vac) is established on the input capacitor Cin, no current path of the input current Iin is provided. At this condition, the unidirectional switch D is not turned on, and the power generation circuit 20 only provides a voltage source Vs to maintain the stable operation of the controller IC. During a time period T2, the freewheeling capacitor Cf has no stored energy (the stored energy has been discharged in the previous cycle), and since the voltage on the series-connected input capacitor Cin and the voltage stabilizing capacitor Cs (i.e., the DC voltage Vac plus the voltage source Vs) is less than the AC voltage Vac, the negative half cycle harmonic compensation path Lnh is provided to charge the freewheeling capacitor Cf so that the capacitor voltage Vcf is stablished on the freewheeling capacitor Cf.

During a time period T3, the freewheeling capacitor Cf has established the capacitor voltage Vcf, and therefore the negative half cycle harmonic compensation path Lnh is disconnected. At this condition, since the AC voltage Vac is still greater than the DC voltage Vdc on the input capacitor Cin, a negative half cycle rectifying path Lnr is formed so that the AC voltage Vac charges the input capacitor Cin. During a time period T4, since the AC voltage Vac is less than the DC voltage Vdc on the input capacitor Cin, the negative half cycle rectifying path Lnr is disconnected, and no current path of the input current Iin is provided. When the negative half cycle harmonic compensation path Lnh is provided, the voltage source Vs charges the freewheeling capacitor Cf so that a waveform I of a first compensation current is generated during the time period T2. The waveform I of the first compensation current just compensates a missing part of the input current Iin (i.e., the missing part of a negative half cycle rectifying current waveform II) before the negative half cycle rectifying path Lnr is formed. Therefore, the negative half cycle waveform of the compensated input current Iin (i.e., the waveform I plus the waveform II) is close to the negative half cycle waveform of the AC voltage Vac.

At the junction of the time period T4 and a time period T5, the AC voltage Vac changes from the negative half cycle to the positive half cycle. During the time period T5, since a voltage generated in the previous cycle (i.e., the negative half cycle of the AC voltage Vac) is established on the input capacitor Cin, no current path of the input current Iin is provided. At this condition, the unidirectional switch D is not turned on, and the power generation circuit 20 only provides a voltage source Vs to maintain the stable operation of the controller IC. During a time period T6, since the capacitor voltage Vcf is established by the freewheeling capacitor Cf in the previous cycle, and the AC voltage Vac plus the capacitor voltage Vcf is greater than the DC voltage Vdc on the input capacitor Cin, the energy stored in the freewheeling capacitor Cf is released to the input capacitor Cin through the positive half cycle harmonic compensation path Lph (until the capacitor voltage Vcf plus the AC voltage Vac is less than the DC voltage Vdc on the input capacitor Cin) when the positive half cycle harmonic compensation is performed.

During a time period T7, since the capacitor voltage Vcf plus the AC voltage Vac is less than the DC voltage Vdc on the input capacitor Cin, the positive half cycle harmonic compensation path Lph is disconnected. At this condition, since the AC voltage Vac is still greater than the DC voltage Vdc on the input capacitor Cin, a positive half cycle rectifying path Lpr is formed so that the AC voltage Vac charges the input capacitor Cin. During a time period T8, since the AC voltage Vac is less than the DC voltage Vdc on the input capacitor Cin, the positive half cycle rectifying path Lpr is disconnected, and no current path of the input current Iin is provided. When the positive half cycle harmonic compensation path Lph is provided, the stored energy of the freewheeling capacitor Cf is released to the input capacitor Cin so that a waveform III of a second compensation current is generated during the time period T6. The waveform III of the second compensation current just compensates a missing part of the input current Iin (i.e., the missing part of a positive half cycle rectifying current waveform IV) before the positive half cycle rectifying path Lpr is formed. Therefore, the positive half cycle waveform of the compensated input current Iin (i.e., the waveform III plus the waveform IV) is close to the positive half cycle waveform of the AC voltage Vac.

Please refer to FIG. 1 to FIG. 2B again. The reason why the freewheeling switch 10 uses the first diode D1 in series with the second diode D2 is that a forward conduction voltage of the bridge rectifying diode Db1-Db4 is about 1 volt, and a forward conduction voltage of an ordinary diode is about 0.7 volts. When the freewheeling switch 10 only uses a single diode, and the bridge rectifying diode Db2 between the live wire end L and the positive end A and the single diode of the freewheeling switch 10 are both forward biased (turned on), the voltage across the bridge rectifying diode Db2 will be greater than the voltage across the single diode of the freewheeling switch 10. Therefore, a negative voltage will be generated on the freewheeling capacitor Cf, which will cause adverse effects when the filter circuit 100 performs harmonic compensation, and even affect the life of components. Based on the above reasons, in one embodiment of the present disclosure, the freewheeling switch 10 uses the first diode D1 in series with the second diode D2 to increase the voltage across the two diodes to about 1.4 volts, which is greater than the voltage across the bridge rectifying diode Db2 (about 1 volt). That is, a first conduction voltage, such as 1.4 volts of the freewheeling switch 10 will be greater than a second conduction voltage, such as 1 volt of the bridge rectifying diode Db2 between the live wire end L and the positive end A. Therefore, the freewheeling capacitor Cf will not generate a negative voltage when the bridge rectifying diode Db2 and the freewheeling switch 10 are both forward biased (turned on), thereby increasing the compensation effect of the filter circuit 100 when performing harmonic compensation. In one embodiment, the freewheeling switch 10 is not limited to a circuit structure in which the first diode D1 is connected to the second diode D2 in series. Any circuit structure and application that can ensure that the forward conduction voltage of the freewheeling switch 10 can be greater than the conduction voltage of the bridge rectifying diode Db1-Db4 (for example, by using a switch and its control technology) should be embraced within the scope of the present disclosure. For example, the freewheeling switch 10 may choose a single diode whose condition voltage is greater than the conduction voltage of the bridge rectifying diode Db1-Db4, or use multiple diodes in series to make the total conduction voltage be greater than the conduction voltage of the bridge rectifying diode Db1-Db4, or any component whose conduction voltage is greater than the conduction voltage of the bridge rectifying diode Db1-Db4.

In addition, since the voltage stabilizing capacitor Cs must provide a stable power to continuously supply power to the controller IC, and the freewheeling capacitor Cf only needs to provide short-term power during the time periods T2 and T6 to generate the corresponding current paths, the capacitance value of the voltage stabilizing capacitor Cs must be greater than the capacitance value of the freewheeling capacitor Cf, and it is better to use an electrolytic capacitor as the voltage stabilizing capacitor Cs. Also, an electrolytic capacitor, a ceramic capacitor, or a tantalum capacitor may be used as the freewheeling capacitor Cf. Moreover, the capacitance value of the freewheeling capacitor Cf will affect the current waveforms during the time periods T2 and T6 (i.e., the waveforms I and III). When the capacitance value of the freewheeling capacitor Cf is smaller, the energy can be stored and released is less so that the duration of the time periods T2 and T6 is shorter, and the waveforms I and III are steeper. Otherwise, the duration of the time periods T2 and T6 is longer, and the waveforms I and III are relatively gentle. Therefore, the capacitance value of the freewheeling capacitor Cf may be adjusted according to actual requirements to acquire different harmonic compensation effects of the filter circuit 100.

## Claims

1. A filter circuit (100) with harmonic compensation, configured to be coupled to a bridge rectifying circuit (200) receiving an AC voltage (Vac) and an input capacitor (Cin), the bridge rectifying circuit (200) comprising a live wire end (L), a neutral wire end (N), a positive end (A), and a negative end (B), the filter circuit (100) comprising
a freewheeling capacitor (Cf), a first end of the freewheeling capacitor (Cf) coupled to the live wire end (L),
a freewheeling switch (10), a first end of the freewheeling switch (10) coupled to a second end of the freewheeling capacitor (Cf), and a second end of the freewheeling switch (10) coupled to the positive end (A) and the input capacitor (Cin), and
a unidirectional switch (D),
**characterized in that**
a first end of the unidirectional switch (D) is coupled to the second end of the freewheeling capacitor (Cf) and the first end of the freewheeling switch (10), and a second end of the unidirectional switch (D) is configured to receive a voltage source (Vs), wherein a power generation circuit (20) is configured to supply the voltage source (Vs) to a node between the freewheeling capacitor (Cf) and the freewheeling switch (10) through the unidirectional switch (D), and to charge the freewheeling capacitor (Cf), and the freewheeling switch (10) is configured to provide a discharge path from the freewheeling capacitor (Cf) to the input capacitor (Cin),
wherein a first conduction voltage of the freewheeling switch (10) is greater than a second conduction voltage between the live wire end (L) and the positive end (A) of the bridge rectifying circuit (200).

2. The filter circuit (100) as claimed in claim 1, wherein the freewheeling switch (10) comprises:
a first diode (D1) coupled to the freewheeling capacitor (Cf) and the unidirectional switch (D), and
a second diode (D2) coupled to the first diode (D1) in series and the input capacitor (Cin).

3. The filter circuit (100) as claimed in claim 2, wherein when the first diode (D1) is turned on, a first forward conduction voltage is generated, and when the second diode (D2) is turned on, a second forward conduction voltage is generated; the sum of the first forward conduction voltage and the second forward conduction voltage is the first conduction voltage; a bridge rectifying diode (Db2) is provided between the live wire end (L) and the positive end (A), and the first conduction voltage is greater than the second conduction voltage of the bridge rectifying diode (Db2).

4. The filter circuit (100) as claimed in claim 1, wherein the power generation circuit (20) comprising:
a power generation circuit (20) coupled to the unidirectional switch (D) and the negative end (B), and comprising:
an auxiliary winding (22), a first end of the auxiliary winding (22) coupled to the unidirectional switch (D), a second end of the auxiliary winding (22) coupled to the negative end (B), and
a voltage stabilizing capacitor (Cs) coupled to the auxiliary winding (22) in parallel,
wherein the power generation circuit (20) is coupled to the unidirectional switch (D) and the negative end (B), and the auxiliary winding (22) is configured to generate an auxiliary voltage (Vaux) to be the voltage source (Vs).

5. The filter circuit (100) as claimed in claim 4, further comprising:
a rectifying switch (Dc) coupled to the auxiliary winding (22) and the voltage stabilizing capacitor (Cs).

6. The filter circuit (100) as claimed in claim 4, wherein a capacitance value of the voltage stabilizing capacitor (Cs) is greater than a capacitance value of the freewheeling capacitor (Cf).

7. The filter circuit (100) as claimed in claim 4, wherein the input capacitor (Cin) is coupled to an electronic apparatus (300) having a transformer, and the auxiliary winding (22) is configured to generate the auxiliary voltage (Vaux) by coupling the transformer.

8. The filter circuit (100) as claimed in claim 7, wherein the voltage stabilizing capacitor (Cs) is coupled to a controller (IC); the controller (IC) is configured to control the electronic apparatus (300) and the voltage source (Vs) provides the required power for the controller (IC).

9. The filter circuit (100) as claimed in claim 4, wherein in a negative half cycle of the AC voltage (Vac), the power generation circuit (20) is configured to charge the freewheeling capacitor (Cf) and to generate a first compensation current; the first compensation current compensates a negative half cycle missing part of an input current (Iin) received by the bridge rectifying circuit (200) so that a negative half cycle waveform of the compensated input current (Iin) is close to a negative half cycle waveform of the AC voltage (Vac).

10. The filter circuit (100) as claimed in claim 4, wherein a negative half cycle harmonic compensation path (Lnh) of the filter circuit (100) comprises the positive end (A), the input capacitor (Cin), the power generation circuit (20), the unidirectional switch (D), the freewheeling capacitor (Cf), and the live wire end (L).

11. The filter circuit (100) as claimed in claim 1, wherein in a positive half cycle of the AC voltage (Vac), the AC voltage (Vac) charges the freewheeling capacitor (Cf) to generate a second compensation current; the second compensation current compensates a positive half cycle missing part of an input current (Iin) received by the bridge rectifying circuit (200) so that a positive half cycle waveform of the compensated input current (Iin) is close to a positive half cycle waveform of the AC voltage (Vac).

12. The filter circuit (100) as claimed in claim 1, wherein a positive half cycle harmonic compensation path (Lph) of the filter circuit (100) comprises the live wire end (L), the freewheeling capacitor (Cf), the freewheeling switch (10), the input capacitor (Cin), and the negative end (B).

## Patentansprüche

1. Filterschaltung (100) mit Oberwellenkompensation, die so konfiguriert ist, dass sie mit einer Brückengleichrichterschaltung (200) gekoppelt ist, die eine Wechselspannung (Vac) und einen Eingangskondensator (Cin) empfängt, wobei die Brückengleichrichterschaltung (200) ein stromführendes Drahtende (L), ein neutrales Drahtende (N), ein positives Ende (A) und ein negatives Ende (B) umfasst, wobei die Filterschaltung (100) umfasst:
einen Freilaufkondensator (Cf), wobei ein erstes Ende des Freilaufkondensators (Cf) mit dem stromführenden Leitungsende (L) gekoppelt ist,
einen Freilaufschalter (10), wobei ein erstes Ende des Freilaufschalters (10) mit einem zweiten Ende des Freilaufkondensators (Cf) gekoppelt ist, und ein zweites Ende des Freilaufschalters (10) mit dem positiven Ende (A) und dem Eingangskondensator (Cin) gekoppelt ist, und
einen unidirektionalen Schalter (D), **dadurch gekennzeichnet, dass** ein erstes Ende des unidirektionalen Schalters (D) mit dem zweiten Ende des Freilaufkondensators (Cf) und dem ersten Ende des Freilaufschalters (10) gekoppelt ist, und ein zweites Ende des unidirektionalen Schalters (D) so konfiguriert ist, dass es eine Spannungsquelle (Vs) empfängt, wobei eine Energieerzeugungsschaltung (20) so konfiguriert ist, dass sie die Spannungsquelle (Vs) über den unidirektionalen Schalter (D) an einen Knoten zwischen dem Freilaufkondensator (Cf) und dem Freilaufschalter (10) liefert und den Freilaufkondensator (Cf) auflädt, und der Freilaufschalter (10) so konfiguriert ist, dass er einen Entladungspfad von dem Freilaufkondensator (Cf) zu dem Eingangskondensator (Cin) bereitstellt,
wobei eine erste Leitspannung des Freilaufschalters (10) größer ist als eine zweite Leitspannung zwischen dem stromführenden Drahtende (L) und dem positiven Ende (A) der Brückengleichrichterschaltung (200).

2. Die Filterschaltung (100) nach Anspruch 1, wobei der Freilaufschalter (10) umfasst:
eine erste Diode (D1), die mit dem Freilaufkondensator (Cf) und dem unidirektionalen Schalter (D) verbunden ist, und
eine zweite Diode (D2), die mit der ersten Diode (D1) in Reihe geschaltet ist, und den Eingangskondensator (Cin).

3. Die Filterschaltung (100) nach Anspruch 2, wobei beim Einschalten der ersten Diode (D1) eine erste Durchlassspannung erzeugt wird, und beim Einschalten der zweiten Diode (D2) eine zweite Durchlassspannung erzeugt wird; die Summe der ersten Durchlassspannung und der zweiten Durchlassspannung die erste Leitspannung ist; eine Brückengleichrichterdiode (Db2) zwischen dem stromführenden Drahtende (L) und dem positiven Ende (A) vorgesehen ist, und die erste Leitspannung größer ist als die zweite Leitspannung der Brückengleichrichterdiode (Db2).

4. Die Filterschaltung (100) nach Anspruch 1, wobei die Stromerzeugungsschaltung (20) umfasst:
eine Stromerzeugungsschaltung (20), die mit dem unidirektionalen Schalter (D) und dem negativen Ende (B) gekoppelt ist und Folgendes umfasst:
eine Hilfswicklung (22), wobei ein erstes Ende der Hilfswicklung (22) mit dem unidirektionalen Schalter (D) verbunden ist, ein zweites Ende der Hilfswicklung (22) mit dem negativen Ende (B) verbunden ist, und
einen Spannungsstabilisierungskondensator (Cs), der mit der Hilfswicklung (22) parallel geschaltet ist,
wobei die Stromerzeugungsschaltung (20) mit dem unidirektionalen Schalter (D) und dem negativen Ende (B) gekoppelt ist, und die Hilfswicklung (22) so konfiguriert ist, dass sie eine Hilfsspannung (Vaux) erzeugt, die die Spannungsquelle (Vs) ist.

5. Die Filterschaltung (100) nach Anspruch 4, die ferner Folgendes umfasst:
einen Gleichrichterschalter (Dc), der mit der Hilfswicklung (22) und dem Spannungsstabilisierungskondensator (Cs) verbunden ist.

6. Die Filterschaltung (100) nach Anspruch 4, wobei ein Kapazitätswert des Spannungsstabilisierungskondensators (Cs) größer ist als ein Kapazitätswert des Freilaufkondensators (Cf).

7. Die Filterschaltung (100) nach Anspruch 4, wobei der Eingangskondensator (Cin) mit einem elektronischen Gerät (300) gekoppelt ist, das einen Transformator aufweist, und die Hilfswicklung (22) so konfiguriert ist, dass sie die Hilfsspannung (Vaux) durch Kopplung des Transformators erzeugt.

8. Die Filterschaltung (100) nach Anspruch 7, wobei der Spannungsstabilisierungskondensator (Cs) mit einem Controller (IC) gekoppelt ist; der Controller (IC) so konfiguriert ist, dass er das elektronische Gerät (300) steuert, und die Spannungsquelle (Vs) die erforderliche Leistung für den Controller (IC) liefert.

9. Die Filterschaltung (100) nach Anspruch 4, wobei die Energieerzeugungsschaltung (20) so konfiguriert ist, dass sie in einem negativen Halbzyklus der Wechselspannung (Vac) den Freilaufkondensator (Cf) auflädt und einen ersten Kompensationsstrom erzeugt; wobei der erste Kompensationsstrom einen fehlenden Teil eines negativen Halbzyklus eines Eingangsstroms (Iin) kompensiert, der von der Brückengleichrichterschaltung (200) empfangen wird, so dass eine negative Halbzyklus-Wellenform des kompensierten Eingangsstroms (Iin) nahe an einer negativen Halbzyklus-Wellenform der Wechselspannung (Vac) liegt.

10. Die Filterschaltung (100) nach Anspruch 4, wobei ein negativer Halbzyklus-Oberwellenkompensationspfad (Lnh) der Filterschaltung (100) das positive Ende (A), den Eingangskondensator (Cin), die Stromerzeugungsschaltung (20), den unidirektionalen Schalter (D), den Freilaufkondensator (Cf) und das stromführende Drahtende (L) umfasst.

11. Die Filterschaltung (100) nach Anspruch 1, wobei in einem positiven Halbzyklus der Wechselspannung (Vac) die Wechselspannung (Vac) den Freilaufkondensator (Cf) auflädt, um einen zweiten Kompensationsstrom zu erzeugen; der zweite Kompensationsstrom kompensiert einen fehlenden Teil eines positiven Halbzyklus eines Eingangsstroms (Iin), der von der Brückengleichrichterschaltung (200) empfangen wird, so dass eine positive Halbzyklus-Wellenform des kompensierten Eingangsstroms (Iin) nahe an einer positiven Halbzyklus-Wellenform der Wechselspannung (Vac) liegt.

12. Die Filterschaltung (100) nach Anspruch 1, wobei ein positiver Halbzyklus-Oberwellenkompensationspfad (Lph) der Filterschaltung (100) das stromführende Leitungsende (L), den Freilaufkondensator (Cf), den Freilaufschalter (10), den Eingangskondensator (Cin) und das negative Ende (B) umfasst.

## Revendications

1. Circuit de filtrage (100) avec compensation des harmoniques, configuré pour être couplé à un circuit redresseur en pont (200) recevant une tension alternative (Vac) et un condensateur d'entrée (Cin), le circuit redresseur en pont (200) comprenant une extrémité de fil conduisant le courant (L), une extrémité de fil neutre (N), une extrémité positive (A) et une extrémité négative (B), le circuit de filtrage (100) comprenant
un condensateur de roue libre (Cf), une première extrémité du condensateur de roue libre (Cf) étant couplée à l'extrémité de ligne (L) conduisant le courant,
un commutateur de roue libre (10), une première extrémité du commutateur de roue libre (10) étant couplée à une deuxième extrémité du condensateur de roue libre (Cf), et une deuxième extrémité du commutateur de roue libre (10) étant couplée à l'extrémité positive (A) et au condensateur d'entrée (Cin), et
un commutateur unidirectionnel (D), **caractérisé en ce qu'**une première extrémité du commutateur unidirectionnel (D) est couplée à la seconde extrémité du condensateur de roue libre (Cf) et à la première extrémité du commutateur de roue libre (10), et une seconde extrémité du commutateur unidirectionnel (D) est configurée pour recevoir une source de tension (Vs), un circuit de génération d'énergie (20) étant configuré pour, pour fournir la source de tension (Vs) à travers le commutateur unidirectionnel (D) à un noeud entre le condensateur de roue libre (Cf) et le commutateur de roue libre (10) et pour charger le condensateur de roue libre (Cf), et le commutateur de roue libre (10) est configuré pour fournir un chemin de décharge du condensateur de roue libre (Cf) au condensateur d'entrée (Cin),
dans lequel une première tension de conduction du commutateur de roue libre (10) est supérieure à une seconde tension de conduction entre l'extrémité de fil conduisant le courant (L) et l'extrémité positive (A) du circuit redresseur en pont (200).

2. Le circuit de filtrage (100) selon la revendication 1, dans lequel le commutateur à roue libre (10) comprend :
une première diode (D1) connectée au condensateur de roue libre (Cf) et au commutateur unidirectionnel (D), et
une deuxième diode (D2) connectée en série avec la première diode (D1), et le condensateur d'entrée (Cin).

3. Le circuit de filtrage (100) selon la revendication 2, dans lequel une première tension directe est générée lors de la mise en circuit de la première diode (D1) et une deuxième tension directe est générée lors de la mise en circuit de la deuxième diode (D2) ; la somme de la première tension directe et de la deuxième tension directe est la première tension de conduction ; une diode de redressement en pont (Db2) est prévue entre l'extrémité de fil conduisant le courant (L) et l'extrémité positive (A), et la première tension de conduction est supérieure à la deuxième tension de conduction de la diode de redressement en pont (Db2).

4. Le circuit de filtrage (100) selon la revendication 1, dans lequel le circuit de génération de courant (20) comprend :
un circuit de génération de courant (20) couplé au commutateur unidirectionnel (D) et à l'extrémité négative (B) et comprenant :
un enroulement auxiliaire (22), une première extrémité de l'enroulement auxiliaire (22) étant connectée à l'interrupteur unidirectionnel (D), une deuxième extrémité de l'enroulement auxiliaire (22) étant connectée à l'extrémité négative (B), et
un condensateur de stabilisation de tension (Cs) connecté en parallèle avec l'enroulement auxiliaire (22),
dans lequel le circuit de génération de courant (20) est couplé au commutateur unidirectionnel (D) et à l'extrémité négative (B), et l'enroulement auxiliaire (22) est configuré pour générer une tension auxiliaire (Vaux) qui est la source de tension (Vs).

5. Le circuit de filtrage (100) selon la revendication 4, qui comprend en outre les éléments suivants :
un interrupteur redresseur (Dc) connecté à l'enroulement auxiliaire (22) et au condensateur de stabilisation de tension (Cs).

6. Le circuit de filtrage (100) selon la revendication 4, dans lequel une valeur de capacité du condensateur de stabilisation de tension (Cs) est supérieure à une valeur de capacité du condensateur de roue libre (Cf).

7. Le circuit de filtrage (100) selon la revendication 4, dans lequel le condensateur d'entrée (Cin) est couplé à un appareil électronique (300) comprenant un transformateur, et l'enroulement auxiliaire (22) est configuré pour générer la tension auxiliaire (Vaux) en couplant le transformateur.

8. Le circuit de filtrage (100) selon la revendication 7, dans lequel le condensateur de stabilisation de tension (Cs) est couplé à un contrôleur (IC) ; le contrôleur (IC) est configuré pour commander le dispositif électronique (300), et la source de tension (Vs) fournit la puissance nécessaire au contrôleur (IC).

9. Le circuit de filtrage (100) selon la revendication 4, dans lequel le circuit de génération d'énergie (20) est configuré pour charger le condensateur de roue libre (Cf) dans un demi-cycle négatif de la tension alternative (Vac) et pour générer un premier courant de compensation ; dans lequel le premier courant de compensation compense une partie manquante d'un demi-cycle négatif d'un courant d'entrée (Iin) reçu par le circuit redresseur en pont (200), de sorte qu'une forme d'onde de demi-cycle négatif du courant d'entrée compensé (Iin) est proche d'une forme d'onde de demi-cycle négatif de la tension alternative (Vac).

10. Le circuit de filtrage (100) selon la revendication 4, dans lequel un trajet de compensation d'harmoniques de demi-cycle négatif (Lnh) du circuit de filtrage (100) comprend l'extrémité positive (A), le condensateur d'entrée (Cin), le circuit de génération de courant (20), le commutateur unidirectionnel (D), le condensateur de roue libre (Cf) et l'extrémité de fil conduisant le courant (L).

11. Le circuit de filtrage (100) selon la revendication 1, dans lequel, dans un demi-cycle positif de la tension alternative (Vac), la tension alternative (Vac) charge le condensateur de roue libre (Cf) pour produire un second courant de compensation ; le second courant de compensation compense une partie manquante d'un demi-cycle positif d'un courant d'entrée (Iin) reçu par le circuit redresseur en pont (200) de sorte qu'une forme d'onde de demi-cycle positif du courant d'entrée compensé (Iin) est proche d'une forme d'onde de demi-cycle positif de la tension alternative (Vac).

12. Le circuit de filtrage (100) selon la revendication 1, dans lequel un trajet de compensation d'harmoniques de demi-cycle positif (Lph) du circuit de filtrage (100) comprend l'extrémité de ligne conductrice de courant (L), le condensateur de roue libre (Cf), le commutateur de roue libre (10), le condensateur d'entrée (Cin) et l'extrémité négative (B).
